# EUROPEAN PATENT APPLICATION

(11) **EP 3 032 040 A1**
(43) Date of publication of application: **15.06.2016**
(21) Application number: 15199419.1
(22) Date of filing: 10.12.2015
(51) Int. Cl.: F01D 9/04, F01D 25/16, F01D 25/28

(54) **GEARED TURBOFAN ENGINE**

(30) Priority: 11.12.2014 US 201414566840
(71) Applicant: United Technologies Corporation, Farmington, CT 06032 (US)
(72) Inventor: SUCIU, Gabriel L., Glastonbury, CT Connecticut 06033 (US); SCHWARZ, Frederick M., Glastonbury, CT Connecticut 06033 (US)
(74) Representative: Leckey, David Herbert

(57) **Abstract**

A gas turbine engine turbine comprises a high pressure turbine (130) configured to rotate with a high pressure compressor (126) as a high pressure spool (132) in a first direction about a central axis. A low pressure turbine (134) is configured to rotate with a low pressure compressor (124) as a low pressure spool (136) in a second direction about the central axis. A mid-turbine frame (142) supports the high pressure turbine (130). The mid-turbine frame (142) includes a first bearing (156) supporting the high pressure turbine (130), and a strut (150) supporting the first bearing (156) at a location between the high pressure turbine (130) and the low pressure turbine (134). A plurality of vanes (158) are associated with a first stage of the low pressure turbine (134). The plurality of vanes (156) are positioned within the mid-turbine frame (142).

## Description

### BACKGROUND OF THE INVENTION

This application relates to a geared turbofan gas turbine engine, wherein the low and high pressure spools counter-rotate relative to each other.

Gas turbine engines are known, and typically include a fan delivering air into a compressor section, and outwardly as bypass air to provide propulsion. The air in the compressor is delivered into a combustion section where it is mixed with fuel and burned. Products of this combustion pass downstream over turbine rotors, driving them to rotate. Typically there are low and high pressure compressors, and low and high pressure turbines.

The high pressure turbine typically drives the high pressure compressor as a high spool, and the low pressure turbine drives the low pressure compressor and the fan. Historically, the fan and low pressure compressor were driven at a common speed.

More recently, a gear reduction has been provided on the low pressure spool such that the fan and low pressure compressor can rotate at different speeds. It desirable to have more efficient engines that have more compact turbines to limit efficiency loses.

### SUMMARY

From a first aspect, the present invention provides a gas turbine engine turbine which comprises a high pressure turbine configured to rotate with a high pressure compressor as a high pressure spool in a first direction about a central axis. A low pressure turbine is configured to rotate with a low pressure compressor as a low pressure spool in a second direction about the central axis. A mid-turbine frame supports the high pressure turbine. The mid-turbine frame includes a first bearing supporting the high pressure turbine, and a strut supporting the first bearing at a location between the high pressure turbine and the low pressure turbine. A plurality of vanes are associated with a first stage of the low pressure turbine. The plurality of vanes are positioned within the mid-turbine frame.

In an embodiment of the above turbine, a power density is greater than or equal to about 1.5 lbf/cubic inches (407.4 kN/m³) and less than or equal to about 5.5 lbf/ cubic inches (1493 kN/m³).

In another embodiment according to any of the previous embodiments, a fan is connected to the low pressure spool via a speed changing mechanism and rotates in the first direction.

In another embodiment according to any of the previous embodiments, the high pressure spool is also supported at the high pressure compressor by a thrust bearing, and is supported relative to the outer housing through a second strut creating a straddle-mounted arrangement of the spool.

In another embodiment according to any of the previous embodiments, a nut secures a plurality of struts from the outer core housing.

In another embodiment according to any of the previous embodiments, a support leg extends radially inwardly from the vanes and is connected to the mid-turbine frame.

In another embodiment according to any of the previous embodiments, a radially inner end of the leg is bolted to a portion of the mid-turbine frame at a radially inner location.

In another embodiment according to any of the previous embodiments, the radially inner end is radially outward of the first bearing.

In another embodiment according to any of the previous embodiments, the plurality of vanes is configured in a single row.

In another embodiment according to any of the previous embodiments, the low pressure turbine is one of three turbine rotors. The low pressure turbine drives a fan, and the other two of the turbine rotors each drive a compressor rotor of a compressor section.

In another embodiment according to any of the previous embodiments, a geared architecture is positioned intermediate a fan and a compressor rotor driven by the low pressure turbine.

In another embodiment according to any of the previous embodiments, a geared architecture is positioned intermediate the low pressure turbine and a compressor rotor driven by the low pressure turbine.

From a second aspect, which the Applicant expressly reserves the right to claim, the invention provides a gas turbine engine which comprises a fan section, a compressor section, and a turbine section. The turbine section has a volume. The fan section, compressor section and turbine section are operatively connected to produce a thrust such that a ratio of the thrust, expressed in pounds force, to the turbine section volume, expressed in cubic inches, is greater than or equal to about 1.5. A gear reduction between the fan and a turbine rotor in the section drives the fan.

In an embodiment of the above engine, the ratio is greater than or equal to about 2.0.

In another embodiment according to either of the previous embodiments, the ratio is greater than or equal to about 4.0.

In another embodiment according to any of the previous embodiments, the ratio is greater than or equal to 1.5 and less than or equal to about 5.5.

In another embodiment according to any of the previous embodiments, the turbine section includes a low pressure turbine and a high pressure turbine, and the low and high pressure turbines rotate in opposed directions.

In another embodiment according to any of the previous embodiments, the low pressure turbine drives the fan through the gear reduction, and such that the fan rotates in the same direction as the high pressure turbine.

In another embodiment according to any of the previous embodiments, the fan section delivers a portion of air into a bypass duct and a portion of the air into the compressor section as core flow, and has a bypass ratio greater than 6.

In another embodiment according to any of the previous embodiments, the thrust is sea level take-off, flat-rated static thrust.

In another embodiment according to any of the previous embodiments, the turbine section includes a low pressure turbine and a high pressure turbine, with the low pressure turbine configured to operate at lower speed than the high pressure turbine. The low pressure turbine drives a low pressure compressor, which is part of the compressor section, and the low pressure turbine has a shaft driving a fan of the fan section through the gear reduction.

From a third aspect, which the Applicant expressly reserves the right to claim, the invention provides a gas turbine engine which comprises a fan that delivers air into a low pressure compressor, and into a bypass duct. A low pressure compressor compresses air and delivers the air into a high pressure compressor. Air from the high pressure compressor is delivered into a combustion section where it is mixed with fuel and ignited. Products of the combustion pass downstream over a high pressure turbine, and then a low pressure turbine. The high pressure turbine is configured to rotate in a first direction about a central axis with the high pressure compressor as a high pressure spool. The low pressure turbine is configured to rotate in a second direction, opposed to the first direction, about the central axis with the low pressure compressor as a low pressure spool. The fan is driven by the low pressure turbine through a speed reduction mechanism, and such that the fan and the low pressure compressor rotate at different speeds. The gear reduction is such that the fan rotates in the first direction. A mid-turbine frame for the high pressure turbine includes a first bearing supporting the high pressure turbine relative to an outer core housing of the gas turbine engine. The mid-turbine frame includes a strut supporting the first bearing at a location intermediate a downstream end of the high pressure turbine and an upstream end of the low pressure turbine. A plurality of vanes are positioned upstream of a first stage of the low pressure turbine, and within the mid-turbine frame.

In an embodiment of the above engine, the vanes are positioned downstream of the strut.

In another embodiment according to either of the above embodiments, the high pressure spool is also supported at an upstream end of the high pressure compressor by a second bearing, and supported relative to the outer housing through a second strut in a straddle-mounted arrangement.

In another embodiment according to any of the previous embodiments, a power density is greater than or equal to about 1.5 lbf/ cubic inches (407.4 kN/m³) and less than or equal to about 5.5 lbf/ cubic inches (1493 kN/m³).

In another embodiment according to any of the previous embodiments, a bypass ratio is greater than 6.

In another embodiment according to any of the previous embodiments, a gear ratio of the gear reduction is greater than or equal to about 2.0:1, and less than or equal to about 3.5: 1.

These and other features may be best understood from the following drawings and specification.

### BRIEF DESCRIPTION OF THE DRAWINGS

Figure 1 schematically shows a gas turbine engine.
Figure 2 schematically shows rotational features of one type of such an engine.
Figure 3 is a detail of a strut incorporated into the Figure 2 engine.
Figure 4 is a detail of the turbine section volume.
Figure 5 shows another embodiment.
Figure 6 shows yet another embodiment.

### DETAILED DESCRIPTION

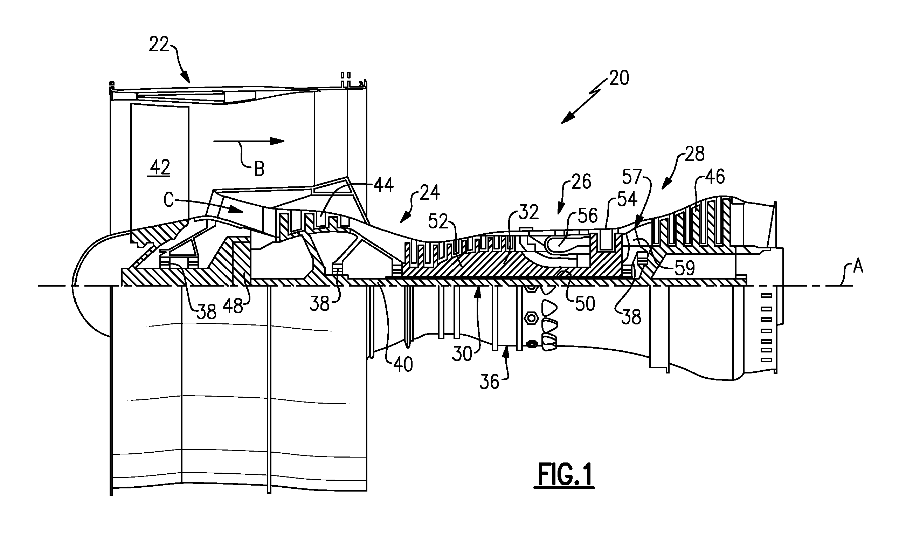

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include, for example, three-spools, an augmentor section, or a different arrangement of sections, among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes true airfoils 59 which are in the core airflow path and act as inlet stator vanes to turn the flow to properly feed the first blades of the Low Pressure Turbine. The turbines 46, 54 rotationally drive the respective low speed spool 30 and high speed spool 32 in response to the expansion.

The engine 20 has bypass airflow B, and in one example is a high-bypass geared aircraft engine. The bypass ratio may be defined as the amount of air delivered into the bypass duct divided by the amount delivered into the core flow. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 and the Low Pressure Turbine has a pressure ratio that is greater than about 5:1. Low pressure turbine 46 pressure ratio is the total pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A greatest amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Low fan pressure ratio" is the pressure ratio across the fan blade alone, before the Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram deg R) / 518.7)^0.5]. The "Low corrected fan tip speed" as disclosed herein according to one non-limiting embodiment is less than about 1150 ft / second (350.5 m/s) at the same cruise point.

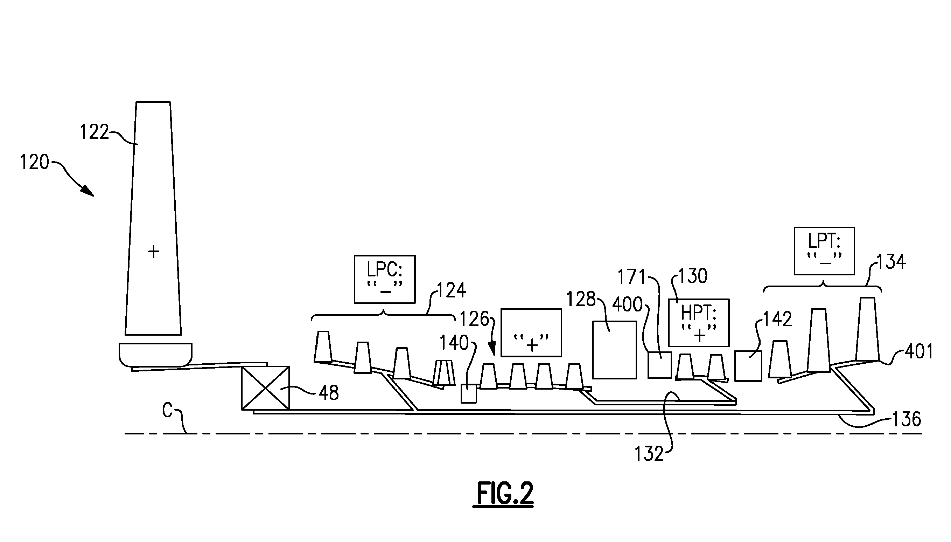

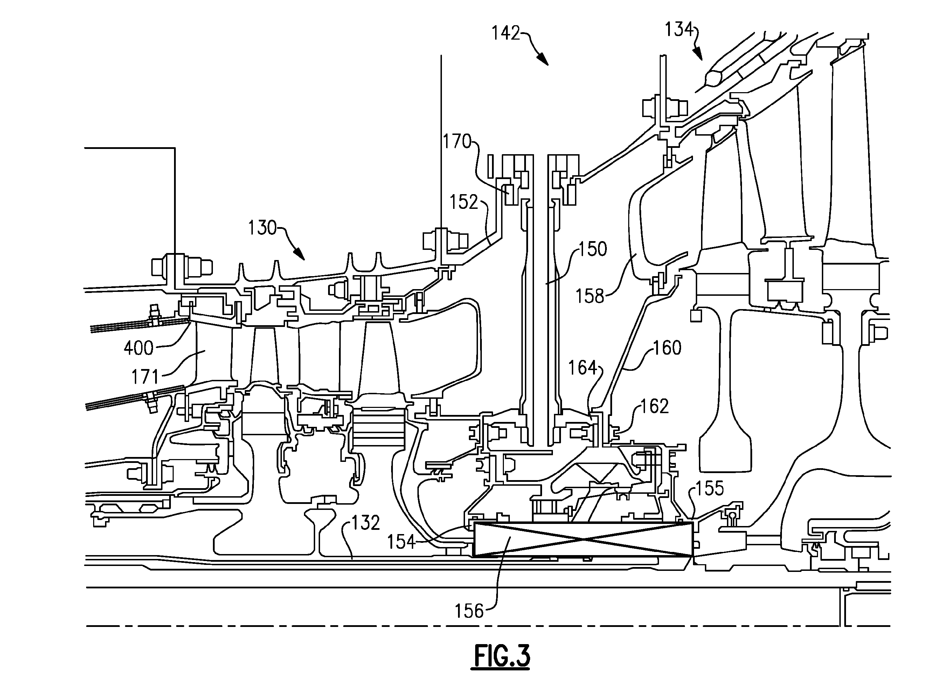

Figure 2 shows detail of an engine 120, which may generally have the features of engine 20 of Figure 1. A fan 122 is positioned upstream of a low pressure compressor 124, which is upstream of a high pressure compressor 126. A combustor 128 is positioned downstream of the high pressure compressor. A mid-turbine frame which also incorporates an air turning vane 158 (see Figure 3) is positioned at a downstream end of the high pressure turbine, and supports a bearing to support the aft end of the high pressure turbine 130, and a high pressure spool 132. A low pressure turbine 134 is positioned downstream of a mid-turbine frame 142. A low spool 136 drives the low pressure compressor 124 by the low pressure turbine 134. The speed change mechanism 48 causes the fan 122 to rotate at a different speed than the low pressure compressor 134. In embodiments of this invention, the speed input to output ratio for the speed change mechanism is above or equal to 2.0:1, and up to less than or equal to 13:1. The gear also causes fan 122 to rotate in an opposed direction relative to the low pressure compressor 124. In this embodiment the fan generally has less than 26 blades, and the low pressure turbine has at least three stages, and up to six stages. The high pressure turbine generally has one or two stages as shown.

In this particular embodiment, the low pressure compressor 124 and the low pressure turbine 134 rotate in one direction while the high pressure turbine 130, the high pressure compressor 126, and the fan 122 rotate in an opposed direction.

With such an arrangement, it is necessary to redirect the flow downstream of the high pressure turbine 134 approaching the first stage of the low pressure turbine 134.

Figure 3 shows a specific embodiment of a mid-turbine frame 142. As shown, an outer housing 152 of the core engine mounts a strut 150 through a press nut 170. It should be understood these are plural, circumferentially spaced struts 150. The strut 150 extends inwardly to support structure 154 and 155, which support a bearing 156. As shown in Figure 2, the high pressure shaft 32 is also supported on another bearing by a strut at 140 at the front of the high pressure compressor 126. The strut and bearing at 140 may combine to hold the net rotor axial loads generated by the High Compressor and the High Turbine and be a thrust bearing. The combination of the strut and bearing at 140 and the strut and bearing in mid-turbine frame 142 combine to hold the high spool in a so-called "straddle-mounted" fashion where the high spool is simply supported between these two structures.

A vane 158 is positioned to be upstream of the first stage of the low pressure turbine 134. While a single vane 158 is illustrated, it should be understood these would be plural vanes 158 spaced circumferentially. The vane redirects the flow downstream of the high pressure turbine 130 as it approaches the first stage of the low pressure turbine 134. As can be appreciated, since the two turbine sections 130 and 134 are rotating in opposed directions, it is desirable from a LPT efficiency standpoint to have this flow precisely redirected by a true airfoil, rather than merely a streamlined shape. Therefore a section through the strut of mid-turbine frame 142 would have the shape of an air-turning airfoil with camber and there is no other airfoil present to align the airflow properly into the low pressure turbine 134.

As shown in this embodiment, the vane 158 is incorporated into the mid-turbine frame 142. As shown, a leg 160 extends radially inwardly and is bolted at 162 to a portion 164 of the mid-turbine frame 142. A radially inner end of leg 160 is radially outward of bearing 156.

By incorporating a true air-turning vane 15 into the frame 142, rather than a streamlined strut and a stator vane row after the strut, the overall length and volume of the combined turbine sections is reduced because the vane 158 serves three functions: that of streamlining support strut 150, protecting the strut and any oil tubes servicing the bearing from exposure to heat and thirdly, turning the flow precisely into the LPT 134 such that it enters the rotating airfoil at the correct flow angle. Further, by incorporating these features together, the overall assembly and arrangement of the turbine sections is also further reduced in volume.

The above features achieve a more or less compact turbine section volume relative to the prior art, including both the high and low pressure turbines, a range of materials can be selected. As one example, by varying the materials for forming the low pressure turbine, the volume can be reduced through the use of more expensive and more exotic engineered materials, or alternatively, lower priced materials can be utilized. In three exemplary embodiments the first rotating blade of the Low Pressure Turbine can be a directionally solidified casting blade, a single crystal casting blade or a hollow, internally cooled blade. All three embodiments will change the turbine volume to be dramatically smaller than the prior art by increasing low pressure turbine speed.

Due to the compact turbine section, a power density, which may be defined as thrust in pounds force produced divided by the volume of the entire turbine section, may be optimized. The volume of the turbine section may be defined by an inlet of a first turbine vane in the high pressure turbine to the exit of the last rotating airfoil in the low pressure turbine, and may be expressed in cubic inches. The static thrust at the engine's flat rated Sea Level Takeoff condition divided by a turbine section volume is defined as power density. The sea level take-off flat-rated static thrust may be defined in lbs force , while the volume may be the volume from the annular inlet of the first turbine vane 171 in the high pressure turbine to the annular exit of the downstream end of the last rotor section in the low pressure turbine. The maximum thrust may be Sea Level Takeoff Thrust "SLTO thrust" which is commonly defined as the flat-rated static thrust produced by the turbofan at sea-level.

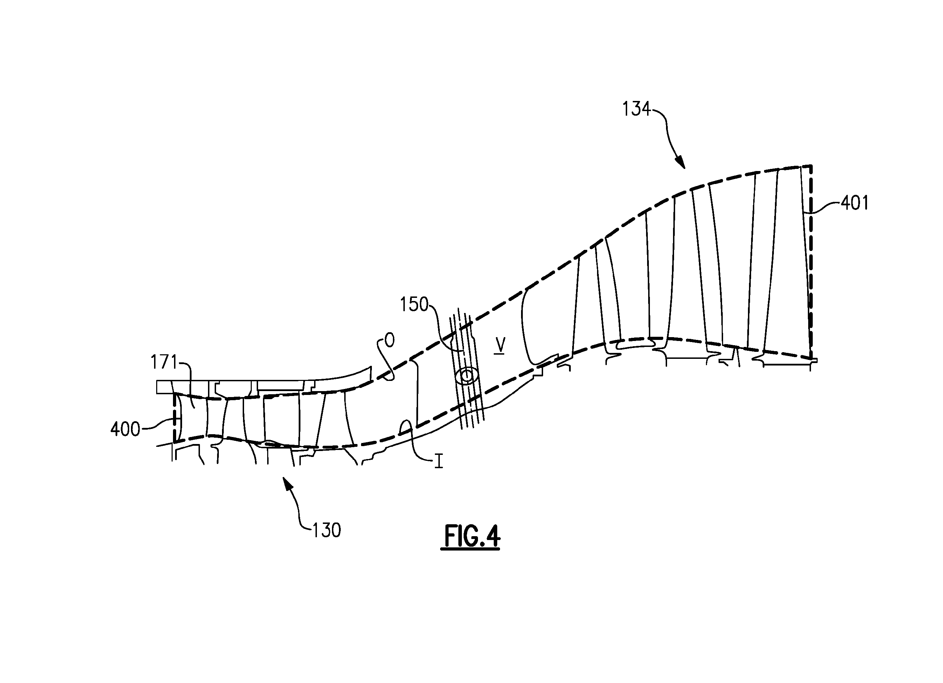

The volume V of the turbine section may be best understood from Figure 4. As shown, the strut 150 is intermediate the high pressure turbine section 130, and the low pressure turbine section 134. The volume V is illustrated by dashed line, and extends from an inner periphery I to an outer periphery O. The inner periphery is somewhat defined by the flowpath of the rotors, but also by the inner platform flow paths of vanes. The outer periphery is defined by the stator vanes and outer air seal structures along the flowpath. The volume extends from a most upstream end of the vane 400, typically its leading edge, and to the most downstream edge 401 of the last rotating airfoil in the low pressure turbine section 134. Typically this will be the trailing edge of that airfoil.

The power density in the disclosed gas turbine engine is much higher than in the prior art. Eight exemplary engines are shown below which incorporate turbine sections and overall engine drive systems and architectures as set forth in this application, and can be found in Table I as follows:

**TABLE 1**

| Engine | Thrust SLTO (lbf) (kN) | Turbine section volume from the Inlet | | Thrust/turbine section volume (lbf / in^3) (kN/m³) | |
|---|---|---|---|---|---|
| | | (in³) | (m³) | | |
| 1 | 17,000 (75.62) | 3,859 | (0.06316) | 4.4 | (1197) |
| 2 | 23,300 (103.64) | 5,330 | (0.08734) | 4.37 | (1187) |
| 3 | 29,500 (131.22) | 6,745 | (0.11053) | 4.37 | (1187) |
| 4 | 33,000 (146.79) | 6,745 | (0.11053) | 4.84 | (1328) |
| 5 | 96,500 (429.25) | 31,086 | (0.50941) | 3.1 | (843) |
| 6 | 96,500 (429.25) | 62,172 | (1.01882) | 1.55 | (421) |
| 7 | 96,500 (429.25) | 46,629 | (0.76411) | 2.07 | (562) |
| 8 | 37,098 (165.02) | 6,745 | (0.11053) | 5.50 | (1493) |

Thus, in embodiments, the power density would be greater than or equal to about 1.5 lbf / in^3 (407.4 kN/m³). More narrowly, the power density would be greater than or equal to about 2.0 lbf / in^3 (543.2 kN/m³).

Even more narrowly, the power density would be greater than or equal to about 3.0 lbf / in^3 (814.8 kN/m³).

More narrowly, the power density is greater than or equal to about 4.0 lbf / in^3 (1086.4 kN/m³).

Also, in embodiments, the power density is less than or equal to about 5.5 lbf / in^3 (1493.8 kN/m³).

Engines made with the disclosed architecture, and including turbine sections as set forth in this application, and with modifications coming from the scope of the claims in this application, thus provide very high efficient operation, and increased fuel efficiency and lightweight relative to their trust capability.

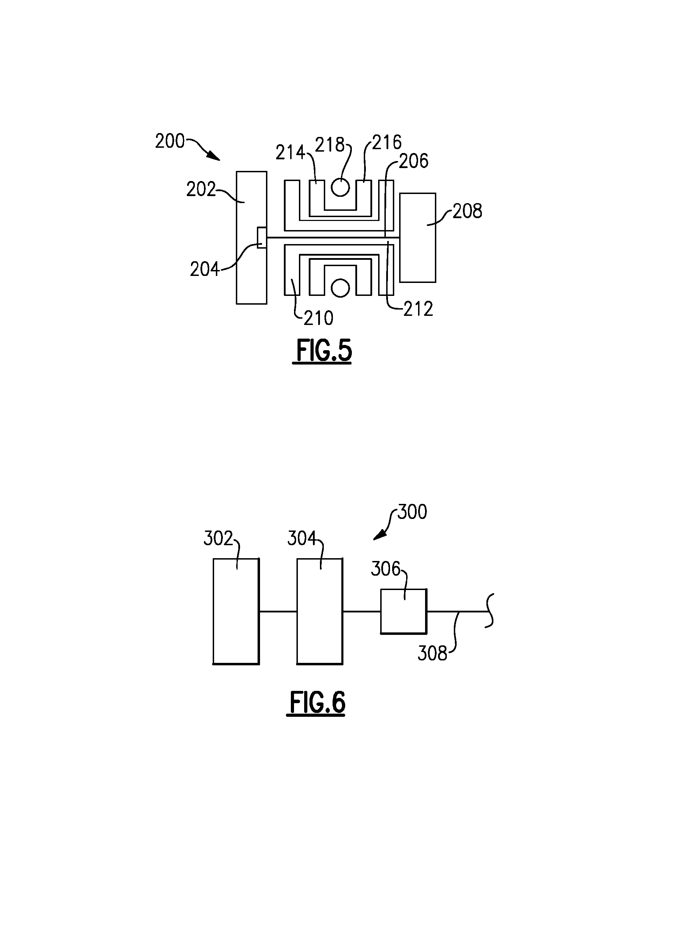

Figure 5 shows an embodiment 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 6 shows yet another embodiment 300 wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

The Figure 5 or 6 engines may be utilized with the features disclosed above.

Although an embodiment of this invention has been disclosed, a person of ordinary skill in this art would recognize that certain modifications would come within the scope of this application. For that reason, the following claims should be studied to determine the true scope and content of this invention.

## Claims

1. A gas turbine engine turbine comprising:
a high pressure turbine (130) configured to rotate with a high pressure compressor (126) as a high pressure spool (132) in a first direction about a central axis;
a low pressure turbine (134) configured to rotate with a low pressure compressor (124) as a low pressure spool (136) in a second direction about said central axis;
a mid-turbine frame (142) for supporting said high pressure turbine (130), said mid-turbine frame (142) including a first bearing (156) supporting said high pressure turbine (130), and a strut (150) supporting said first bearing (156) at a location between said high pressure turbine (130) and said low pressure turbine (134); and
a plurality of vanes (158) associated with a first stage of said low pressure turbine (134), said plurality of vanes (158) positioned within said mid-turbine frame (142).

2. The engine as set forth in claim 1, including a power density that is greater than or equal to about 1.5 lbf/ cubic inches (407.4 kN/m³) and less than or equal to about 5.5 lbf/ cubic inches (1493 kN/m³).

3. The engine as set forth in claim 2, wherein said ratio is greater than or equal to about 2.0 lbf/ cubic inches (543.2 kN/m³).

4. The engine as set forth in claim 3, wherein said ratio is greater than or equal to about 4.0 lbf/ cubic inches (1086.4 kN/m³).

5. The engine as set forth in any preceding claim, wherein a fan (122) is connected to the low pressure spool (136) via a speed changing mechanism (48) and rotates in the first direction.

6. The engine as set forth in any preceding claim, wherein said high pressure spool (130) is also supported at the high pressure compressor (126) by a thrust bearing, and supported relative to an outer housing (152) through a second strut creating a straddle-mounted arrangement of the spool (130).

7. The engine as set forth in any preceding claim, wherein a nut (170) secures a plurality of struts (142) from an outer core housing (152).

8. The engine as set forth in any preceding claim, wherein a support leg (160) extends radially inwardly from said vanes (158) and is connected to said mid-turbine frame (142).

9. The engine as set forth in claim 8, wherein a radially inner end of said leg (160) is bolted to a portion (164) of said mid-turbine frame (142) at a radially inner location (162).

10. The engine as set forth in claim 9, wherein said radially inner end is radially outward of the first bearing (156).

11. The engine as set forth in any preceding claim, wherein said plurality of vanes (158) is configured in a single row.

12. The engine as set forth in any preceding claim, wherein the low pressure turbine (134) is one of three turbine rotors, the low pressure turbine (134) driving a fan (122), the other two of the turbine rotors each driving a compressor rotor of a compressor section.

13. The engine as set forth in any preceding claim, wherein a geared architecture (48) is positioned intermediate a fan (120) and a compressor rotor (124) driven by the low pressure turbine (134).

14. The engine as set forth in any of claims 1 to 12, wherein a geared architecture (306) is positioned intermediate the low pressure turbine (134) and a compressor rotor (304) driven by the low pressure turbine (134).

15. The engine as set forth in any of claims 1 to 12, wherein a geared architecture (204) is positioned between a fan drive turbine (208) and a fan (202) driven by the fan drive turbine (208).
